# EUROPEAN PATENT APPLICATION

(11) **EP 4 465 313 A1**
(43) Date of publication of application: **20.11.2024**
(21) Application number: 23192239.4
(22) Date of filing: 18.08.2023
(51) Int. Cl.: H01F 27/34, H01F 30/10, H02M 3/335, H02M 7/49, H01F 30/12

(54) **N-PHASE TRANSFORMER WITH USE OF SERIAL CONNECTED PHASE CELLS**

(30) Priority: 17.05.2023 EP 23173915
(71) Applicant: Hitachi Energy Ltd, 8050 Zürich (CH)
(72) Inventor: MOGOROVIC, Marko, 1205 Geneva (CH); GRADINGER, Thomas Bernhard, 5032 Aarau Rohr (CH)
(74) Representative: Vossius & Partner Patentanwälte Rechtsanwälte mbB

(57) **Abstract**

The invention a converter system comprising: an N-phase DC-to-AC converter, wherein N is greater than or equal to 2; a plurality of single-phase AC-to-DC converters comprising a first single-phase AC-to-DC converter and a second single-phase AC-to-DC converter; a plurality of primary-side windings comprising a first primary-side winding connected to a first phase output of the N-phase DC-to-AC converter and a second primary-side winding connected to a second phase output of the N-phase DC-to-AC converter; a plurality of secondary-side windings comprising a first secondary-side winding connected to the first single-phase AC-to-DC converter and a second secondary-side winding connected to the second single-phase AC-to-DC converter, wherein the first primary-side winding and the first secondary-side winding are magnetically coupled to each other by being wound around a first core, and wherein the second primary-side winding and the second secondary-side winding are magnetically coupled to each other by being wound around a second core.

## Description

The present disclosure relates to a converter system and a method of producing the converter system.

In converter systems comprising an N-phase AC input (with N bigger or equal to 2; for example via an N-phase DC-to-AC converter), there can be various kinds of disadvantages. The converter systems can be expensive. Also, a need for a higher output voltage can make the converter bigger and heavier, which is also disadvantageous and a cost factor.

The above-mentioned disadvantages are at least partly overcome with the features of the independent claims. Dependent claims define preferred embodiments of the invention.

In particular, the present disclosure relates to a converter system comprising: an N-phase DC-to-AC converter, wherein N is greater than or equal to 2; a plurality of single-phase AC-to-DC converters comprising a first single-phase AC-to-DC converter and a second single-phase AC-to-DC converter; a plurality of primary-side windings comprising a first primary-side winding connected to a first phase output of the N-phase DC-to-AC converter and a second primary-side winding connected to a second phase output of the N-phase DC-to-AC converter; a plurality of secondary-side windings comprising a first secondary-side winding connected to the first single-phase AC-to-DC converter and a second secondary-side winding connected to the second single-phase AC-to-DC converter, wherein the first primary-side winding and the first secondary-side winding are magnetically coupled to each other by being wound around a first core, and wherein the second primary-side winding and the second secondary-side winding are magnetically coupled to each other by being wound around a second core.

The output voltages of the plurality of single-phase AC-to-DC converters (single-phase bridges) are constant, independent of the phases output from the N-phase DC-to-AC converter. The use of one N-phase DC-to-AC converter saves material compared to a system with separate DC-to-AC converters. Especially when semiconductors are used in the plurality of single-phase AC-to-DC converters, a blocking voltage of the semiconductors can be reduced. Semiconductors with a low blocking voltage can also be more cost-effective. Especially compared to an N-phase AC-to-DC converter (in potential prior art), less windings are needed because each winding outputs a separated voltage.

The first phase output of the N-phase DC-to-AC converter and the second phase output of the N-phase DC-to-AC converter may be different phase outputs of the N-phase DC-to-AC converter with different phases. DC stands for direct current. AC stands for alternating current.

Magnetic coupling can mean that power from one magnetically coupled winding can be transferred to the other corresponding magnetically coupled winding. The primary side can be galvanically insulated from the secondary side.

Various embodiments may preferably implement the following features.

Preferably, the first core is a same core as the second core, wherein the first primary-side winding and the first secondary-side winding are wound around a first leg of the first core, and wherein the second primary-side winding and the second secondary-side winding are wound around a second leg of the first core, wherein the second leg is different from the first leg.

The (first and second) core may be a core with N legs.

Preferably, the second core is different from the first core.

The first core and the second core may each be a core for a (corresponding) single-phase transformer. The first core and/or the second core may have more legs and may be configured for a multi-phase transformer (multiphase transformer preferably with less than N phases). For example, if N = 3, the first core may be a single-phase core and the second core may be a two-phase core.

Preferably, the plurality of single-phase AC-to-DC converters further comprises a third single-phase AC-to-DC converter and a fourth single-phase AC-to-DC converter, wherein the converter system further comprises: a third primary-side winding connected to the first phase output of the N-phase DC-to-AC converter and a fourth primary-side winding connected to the second phase output of the N-phase DC-to-AC converter, both comprised by the plurality of primary-side windings; and a third secondary-side winding connected to the third single-phase AC-to-DC converter and a fourth secondary-side winding connected to the fourth single-phase AC-to-DC converter, both comprised by the plurality of secondary-side windings, wherein the third primary-side winding and the third secondary-side winding are wound around a same core as the first primary-side winding, and wherein the fourth primary-side winding and the fourth secondary-side winding are wound around a same core as the second primary-side winding.

This allows for more voltage outputs (from the plurality of AC-to-DC converters) than N. At the same time, it is not necessary to increase the number of cores.

There may be more than two primary-side windings connected to each phase output of the N-phase DC-to-AC converter (the number may differ or be the same between the different phase outputs). These further (more than two) primary-side windings may be wound around the same core for each phase output (similar as for the first and third, and as for the second and fourth). Accordingly, there may be more than two secondary-side windings, each having a separate single-phase AC-to-DC converter. Preferably, each secondary-side winding has a corresponding primary-side winding (each pair of primary-side winding and secondary-side winding forming a winding pair). Such an arrangement saves material because there are less cores needed. Also, in some embodiments, insulation (distance and/or material) can be saved.

Preferably, the third primary-side winding and the third secondary-side winding are wound around a same leg as the first primary-side winding, and wherein the fourth primary-side winding and the fourth secondary-side winding are wound around a same leg as the second primary-side winding.

Preferably, the first primary-side winding is positioned next to the third primary-side winding in an axial direction, and wherein the axial direction extends along a leg the first and third primary-side windings are wound around.

The phrase "next to" may mean that there is no other winding between the first primary-side winding and the third primary-side winding. The same may apply for the first and third secondary-side windings, the second and fourth primary-side windings, and the second and fourth secondary-side windings.

A distance between a center of the first primary-side winding and a center of the first secondary-side winding may be smaller than a distance between a center of the first primary-side winding a third primary-side winding. The term center may be a center of current density, a center of gravity, a geometric center, or the like.

The pair-wise arrangement of the windings of each winding pair together with the short distance (or no distance) between centers of the corresponding windings of a winding pair reduces leakage inductance, by equalizing (minimizing the difference of) the leakage inductance between the winding pairs. Also, this enables that there is substantially no phase shift between the outputs of the secondary-side windings (especially for the exemplary case of a multiport-active bridge (MAB) converter). This allows to draw the same power and current from each secondary-side winding. The phase shift between winding pairs may also be minimized by a possible parallel connection of the primary-side windings of one phase output. This may also improves efficiency.

The centers may also coincide when the corresponding windings have (very) different radii. The radii of the corresponding windings can be as close together as the material (windings, insulation, and so on) allows. The radius of the inner winding of the corresponding windings can be as small as the material allows. Smaller radii and radii which are closer together reduce leakage inductance. Also, the corresponding windings can be as close together as the material allows. Besides the radii, this may also include minimizing (or setting equal) the axial positions along a leg of a core.

Preferably, the plurality of single-phase AC-to-DC converters are connected in series on a DC side of each of the plurality of single-phase AC-to-DC converters.

This allows for a higher (summed, overall) DC output voltage. As each secondary-side winding has its own AC-to-DC converter, the same number of DC output voltages (from the AC-to-DC converters) can be summed up.

Preferably, the converter system comprises further: a plurality of single-phase DC-to-AC converters, wherein each of the plurality of single-phase DC-to-AC converters is connected to a DC side of a corresponding one of the plurality of single-phase AC-to-DC converters, and wherein the plurality of single-phase DC-to-AC converters is connected in series on their AC side.

This allows for a higher (summed, overall) AC output voltage (reference sign 24 in later examples). As each secondary-side winding has its own AC-to-DC converter and its own DC-to-AC converter, the same number of AC output voltages (from the DC-to-AC converters) can be summed up.

Preferably, N is equal to 3. N can also be 2, 4, 5, 10, or any other natural number bigger or equal than 2.

Preferably, each of the plurality of single-phase AC-to-DC converters are full-bridge converters or half-bridge converters.

The single-phase AC-to-DC converter may be a 2 level converter topology, a 5 level converter topology, or a topology in-between (3 or 4). The 2 level converter topology (preferably in full-bridge or half-bridge) are simpler. This may be especially advantageous when there is a big number of converters. The bridges can be active bridges or diode bridges or another kind.

Preferably, the plurality of primary-side windings is connected in a star or delta transformer winding configuration. Also, other transformer winding configurations are possible.

For these transformer winding configurations, the first and third primary-side windings may form a group, and the second and fourth primary-side windings may form another group. The groups may be formed so that windings connected to the same phase output are grouped together.

Preferably, voltages in phase outputs of the N-phase DC-to-AC converter have a phase shift of 360/N degrees relative to each other. Also, other phase shift spreads relative to each other are possible.

Preferably, the plurality of single-phase AC-to-DC converters and the N-phase DC-to-AC converter are of one of the following two- or multilevel converter topologies: neutral point piloted, flying capacitor, or neutral point clamped.

Preferably, the converter system comprises one or more transformer(s) being medium frequency transformer(s) (MFT).

Medium frequency may mean a frequency between 100 Hz (Hertz) and 100 kHz, or between 1 and 10 kHz. Using an MFT and operating at medium frequencies (for example at several kHz) enables to reduce size, cost and weight of the transformer compared to other transformers (for example operating at around 50 or 60 Hz).

The transformer may be a solid state transformer (SST). The converter system may be a DC-to-DC SST.

Preferably, a DC connection of the N-phase DC-to-AC converter is in low voltage, LV, and a connection of the converter system opposite to the DC connection of the N-phase DC-to-AC converter is in medium voltage, MV, or high voltage, HV.

Besides the common definitions, MV may comprise voltages of 1.5 kV to 50 kV (35 kV rms AC voltage or, equivalently, 50 kV DC voltage). It is also possible that LV comprises up to 1.5 kV and HV comprises 1.5 kV and above.

Preferably, each of the plurality of primary-side windings substantially correspond to each other in winding sense, number of turns, and current running through it.

The different voltage pairs can be configured to have similar voltages. This may reduce insulation requirements.

In this disclosure, the term "substantially", as mentioned above, may mean with a deviation of 10%, or 5%, or 1%, or the like.

The present disclosure also relates to a method of producing a converter system comprising: providing an N-phase DC-to-AC converter, wherein N is greater or equal to 2; providing a plurality of single-phase AC-to-DC converters comprising a first single-phase AC-to-DC converter and a second single-phase AC-to-DC converter; providing a plurality of primary-side windings comprising a first primary-side winding connected to a first phase output of the N-phase DC-to-AC converter and a second primary-side winding connected to a second phase output of the N-phase DC-to-AC converter; providing a plurality of secondary-side windings comprising a first secondary-side winding connected to the first single-phase AC-to-DC converter and a second secondary-side winding connected to the second single-phase AC-to-DC converter, wherein the first primary-side winding is magnetically coupled to the first secondary-side winding and wherein the second primary-side winding is magnetically coupled to the second secondary-side winding.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices, and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1 is a schematic illustration according to an embodiment of the converter system.
Figs. 2a and 2b are illustrations of simplifications in other figures.
Figs. 3a to 3d star connection and delta connection configurations.
Fig. 4 is a schematic illustration according to an embodiment of the converter system with star transformer winding configuration.
Fig. 5 is a schematic illustration according to an embodiment of the converter system with delta transformer winding configuration.
Fig. 6 is a schematic illustration according to an embodiment of the converter system with star transformer winding configuration and additional DC-to-AC converters.
Fig. 7 is a schematic illustration of a three-phase transformer core with a windings arrangement according to an embodiment.
Figs. 8a and 8b are schematic illustrations of single-phase transformer cores with a windings arrangement according to embodiments.
Figs. 9a and 9b show schematic illustrations according to another aspect of the converter system.
Fig. 10 is a schematic illustration according to an aspect of how the windings can be interleaved.
Fig. 11 is a flow chart of a method according to an embodiment of the present disclosure.

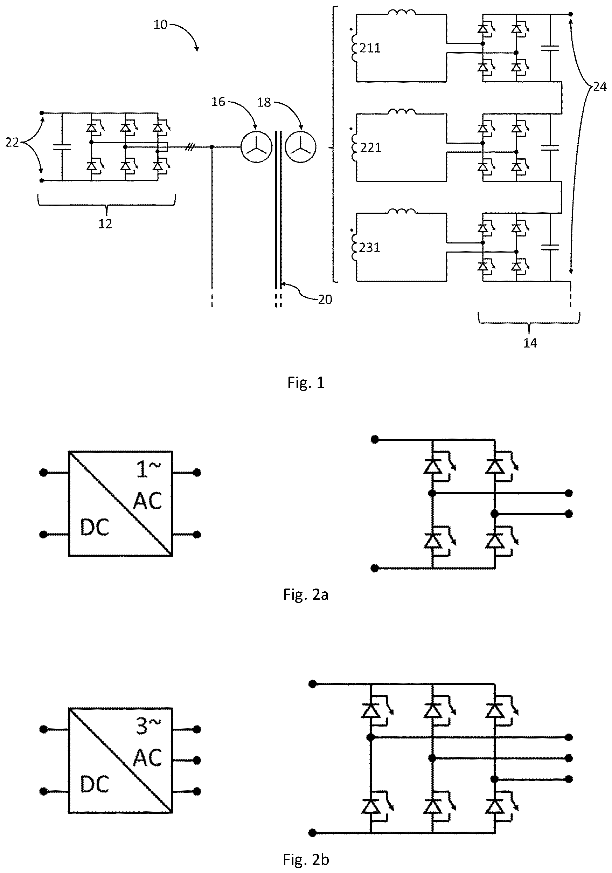

Fig. 1 is a schematic illustration according to an embodiment of the converter system. The converter system 10 shows an N-phase DC-to-AC converter 12, a plurality of single-phase AC-to-DC converters 14, a plurality of primary-side windings 16, a plurality of secondary-side windings 18, and a core-structure 20. The plurality of primary-side windings 16 and the plurality of secondary-side windings 18 are shown in a simplified form. The secondary-side windings (211, 221, 231) are again (shown by the curly bracket) displayed in a more detailed form. The connectors (conductors) between the parts are simplified where three phases are present. This simplification can be seen by the three tilted lines crossing the connector line. At the bottom two dashed lines represent that further windings and AC-to-DC converters may be added in a similar fashion as the parts explicitly shown. In the shown embodiment, N = 3.

The N-phase DC-to-AC converter 12 comprises a first DC port 22. On the other side of the N-phase DC-to-AC converter 12 (AC side), N phases are output via phase outputs of the N-phase DC-to-AC converter 12. These N phases are shown simplified. The N-phase DC-to-AC converter 12 further comprises a capacitor and several switches (e.g. transistors or other). The capacitor can be regarded as not part of the converter.

The plurality of primary-side windings 16, shown simplified, is connected to different phase outputs of the N-phase DC-to-AC converter 12. The primary-side windings are wound around the core structure 20.

It is noted that the word "output" should not only be interpreted as that power is only flowing from the primary side to the secondary side. The other way around is also possible. That is, the power may flow in either direction. In the other way around, the power would be input through the plurality of single-phase AC-to-DC converters 14 (which would rather be single-phase DC-to-AC converter) through the secondary-side windings 18 to the primary-side windings 16 to the N-phase DC-to-AC converter (which would the rather be an N-phase AC-to-DC converter). Reference sign 22 would then be the overall output and reference sign 24 would be the overall input. The possibility of bidirectionality applies to all embodiments described herein.

The core structure 20 can be one core with several legs or several single-phase cores (with two legs). Also, several cores with different number of legs are possible.

The plurality of secondary-side windings 18 are also wound around the core structure 20. The plurality of secondary-side windings 18 comprise secondary-side windings 211, 221, and 231 (three digit reference signs starting with 2 as the first digit). The parts of the secondary-side windings 211, 221, 231 show the windings with winding sense (can also be opposite winding sense), and other coils representing leakage inductances. The secondary-side windings 211, 221, 231 are each connected to a corresponding one of the plurality of single-phase AC-to-DC converters 14. In this way, each output of the single-phase AC-to-DC converters 14 is individual and thus the cells of secondary-side winding and corresponding single-phase AC-to-DC converter 14 are independent.

The other sides of the plurality of single-phase AC-to-DC converters 14 are in this embodiment connected in series to sum up to a second DC port 24. This may lead to higher overall voltages 24. Each single-phase AC-to-DC converter comprises a capacitor and switches (e.g. transistors). The capacitor can be regarded as not part of the converter.

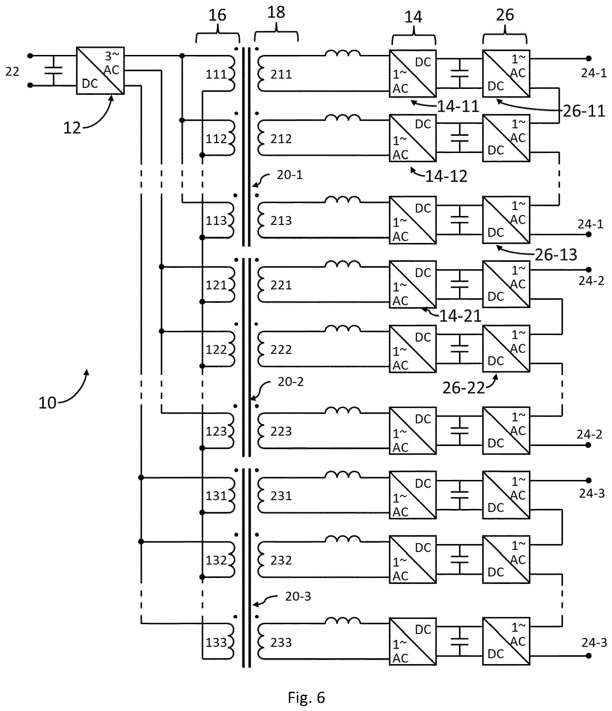

In an example, depending on the required MV level, blocking voltage of the semiconductors and the MV cell converter topology (primary side), even a single winding 3-phase MFT could be used to realize a MV SST. This could lead to strong cost savings due to basic and standard transformer design. As an illustrative example, if a three-level converter topology would be used to realize the HV cells (e.g. neutral-point clamped converter (NPC), neutral-point piloted converter (NPP), flying-capacitor converter (FC), etc.; secondary side) with available 1.2 kV class semiconductors (standard in electric vehicle (EV) applications), the DC bus voltage of each MV cell would be about 1.5 kV DC. Serial connection of 3 such MV cells, corresponding each to one of the 3 MV windings of the 3-phase MFT leads to 4.5 kV DC SST with only one single winding per phase of the 3-phase MFT. If a same exercise would be done for 1.7 kV class semiconductors, it would lead to roughly 6 kV DC SST. If two-level converter topologies would be used for realization of MV cells, such as half-bridge converter, or full-bridge converter, as shown in Figure 6, these voltages would be divided by 2.

Figs. 2a and 2b are illustrations of simplifications in otherfigures. Figs. 2a shows a single-phase DC-to-AC converter simplified on the left and extended on the right side. Fig. 2b shows a (2-level) 3-phase DC-to-AC converter simplified on the left and extended on the right side. An N-phase DC-to-AC converter is corresponding to the 3-phase DC-to-AC converter with N phases. Also, more than two levels are possible, as for example: 3, 4, 5, or more. When in the following figures a simplified version of either converter of figs. 2a and 2b is shown, the extended version is meant. The N-phase DC-to-AC converter may be (in the implementation according to this document) a multi-port active bridge, for example a dual-active bridge, possibly to more than two ports. Alternatively, phase-shift full bridge is also possible. The converters can also be series resonant converters.

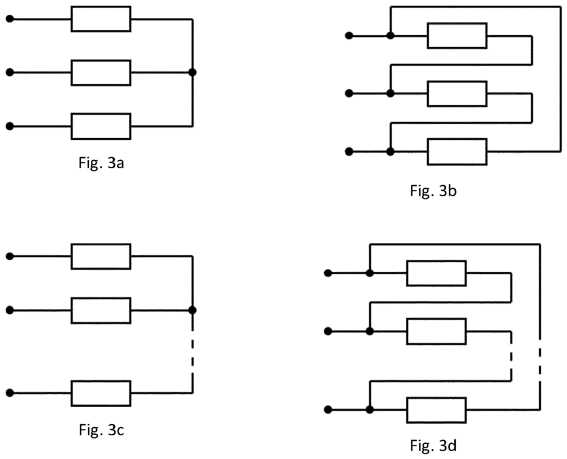

Figs. 3a to 3d show star connection and delta connection configurations. The boxes in the wiring configuration represent parts connected in the corresponding connection configuration. In the following figures these parts will be (groups of) windings in transformer winding configurations. Fig. 3a shows a star connection configuration for 3 phases. Fig. 3b shows a delta connection configuration for 3 phases. Fig. 3c shows a star connection configuration for more than 3 phases. Fig. 3d shows a delta connection configuration for more than 3 phases.

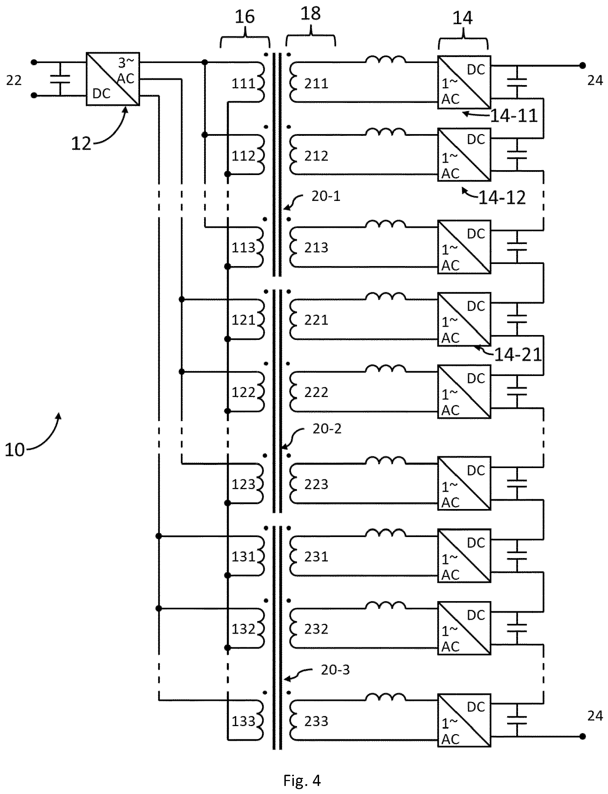

Fig. 4 is a schematic illustration according to an embodiment of the converter system 10 with star transformer winding configuration. The converter system 10 comprises an N-phase DC-to-AC converter 12, a plurality of primary-side windings 16, a plurality of secondary-side windings 18, a plurality of single-phase AC-to-DC converters 14 (only some of which are explicitly marked with an individual reference sign 14-11, 14-12, 14-21; the other reference signs were omitted for simplicity), and a core-structure 20.

Parts and aspects similar to fig. 1 are not necessarily mentioned again.

The plurality of primary-side windings 16 comprises primary-side windings 111, 112, 113, 121, 122, 123, 131, 132, 133 (three digit reference signs starting with 1 as a first digit). Primary-side winding 111 may be the previously described first primary-side winding 111; 121 may be the previously described second primary-side winding 121; 112 may be the previously described third primary-side winding 112; and 122 may be the previously described fourth primary-side winding 122. The plurality of secondary-side windings 18 comprises secondary side windings 211, 212, 213, 221, 222, 223, 231, 232, 233. Secondary-side winding 211 may be the previously described first secondary-side winding 211; 221 may be the previously described second secondary-side winding 221; 212 may be the previously described third secondary-side winding 212; and 222 may be the previously described fourth secondary-side winding 222. The primary-side windings are connected in a star connection configuration (star transformer winding configuration). The primary-side windings 111, 112, and 113 (also windings in-between those implied by the dashed lines) may be seen as a first group also represented by a box in fig. 3c. A second group may be windings 121, 122, 123 (and in-between). A third group may be windings 131, 132, 133 (and in-between).

The connections of the single-phase AC-to-DC converter 14, on the side opposite to the windings, are connected in series to form summed second DC port.

The converter system 10 may be a DC-to-DC SST.

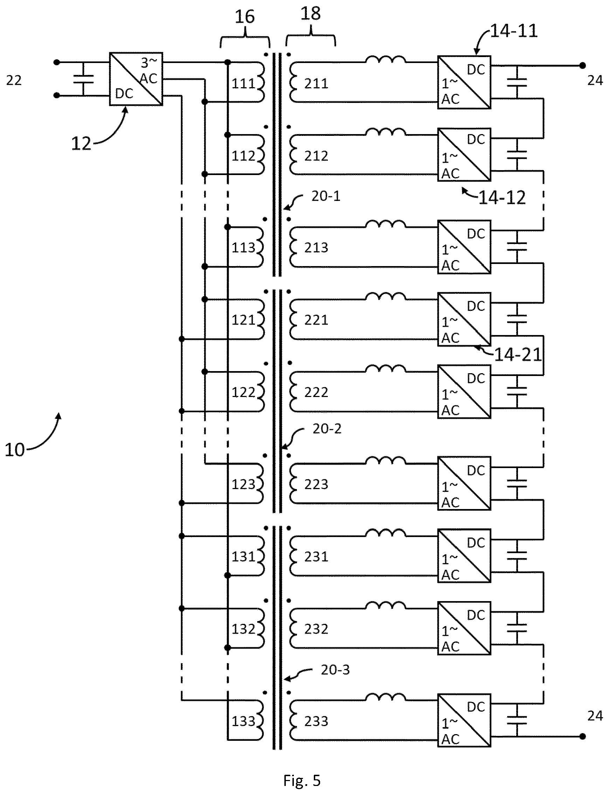

Fig. 5 is a schematic illustration according to an embodiment of the converter system with delta transformer winding configuration. The converter system 10 of fig. 5 is mostly similar to the converter system 10 of fig. 4, except that the primary-side windings are connected in a delta transformer winding configuration.

A converter system 10 of an embodiment may have a first and a second subgroup of primary windings, where the first subgroups of primary windings are connected in star configuration with the phase outputs, and where the second subgroups of primary windings are connected in delta configuration with the phase outputs.

Fig. 6 is a schematic illustration according to an embodiment of the converter system with star transformer winding configuration and additional DC-to-AC converter. The converter system 10 of fig. 6 is mostly similar to the converter system 10 of fig. 4, except that each of the plurality of single-phase DC-to-AC converters 14 is connected to a DC side of a corresponding one of the plurality of single-phase AC-to-DC converters 26, and wherein the plurality of single-phase DC-to-AC converters 26 is connected (group-wise) in series on their AC side. In this figure, the AC outputs of the single-phase DC-to-AC converter are grouped to be connected in series according to the phase output of the N-phase DC-to-AC converter 12 the corresponding primary-windings 16 are connected to. Alternatively, it is possible that the outputs of the single-phase DC-to-AC converters 26 are grouped differently to be connected in series, for example: all are connected in series; groups of 2, 3, 5, 10, or other number; one of each phase output in each group; or different. Such an addition of single-phase DC-to-AC converters 26 can also be added to a converter system with delta transformer wiring configurations as shown in fig. 5. The converter system 10 may be a DC-to-AC SST.

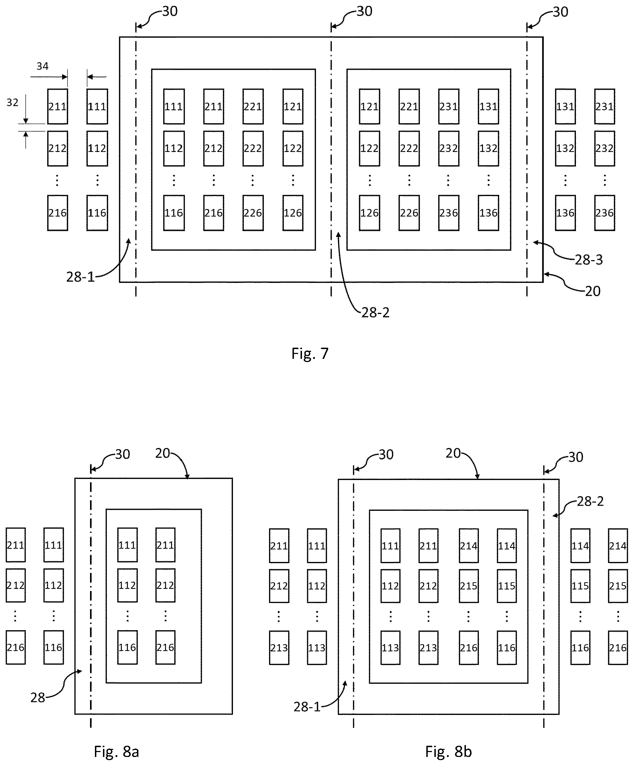

Fig. 7 is a schematic illustration of a three-phase transformer core with a winding arrangement according to an embodiment. It shows how the primary-side and secondary-side windings can be arranged around one core 20. It shows that the primary-side windings (111, 112, 116) and secondary-side windings (211, 212, 216) which belong to the first phase output of the N-phase DC-to-AC converter 12 are wound around a first leg 28-1 of the core 20 (for simplicity reference sign 20, before used for core-structure, is used here for the core). In a similar way, the primary- and secondary-side windings (121, 122, 126, 221, 222, 226) belonging to the second phase output are wound around a second leg 28-2 of the core 20; and the primary- and secondary-side windings (321, 322, 326, 321, 322, 326) belonging to the third phase output are wound around a third leg 28-3 of the core 20.

The primary-side winding of each winding pair is on the inside (radially closer to the leg 28) while the secondary-side winding of each winding pair is on the outside. This is especially advantageous when the secondary side is of a higher voltage than the primary side (for example: primary side is low voltage (LV), and secondary side is medium voltage (MV) or high voltage (HV)) because the higher voltage needs more insulation. However, it is also possible to arrange the windings the other way around (primary side on the outside, and secondary side on the inside, and/or higher voltage on the inside).

The shown concentrical arrangement of windings of the same winding pair (the first primary-side winding and the first secondary-side winding are concentrically arranged around a same first position along an axis of a core of the transformer) and axial arrangement of the different winding pairs (wherein the first winding pair (primary-side winding with corresponding secondary-side winding) is positioned in an axial direction relative to the second winding pair (primary-side winding of the same phase as first winding pair with corresponding secondary-side winding), wherein the axial direction extends along a leg of a leg) allows the system to use less insulation between the winding pairs (in axial direction 30 of the legs). For example, less insulation can be achieved by smaller axial distances 32 between the windings. Also, an improved magnetic coupling can be achieved.

Preferably, windings of the same phase are stacked in bulks and not mixed with windings of other phases. For example, less insulation can be achieved by smaller axial distances 32 between the windings.

In this figure, a transformer arrangement of the core type can be seen. It is also possible to use the shell-type arrangement.

The core 20 in this fig. 7 is for a three-phase transformer. Also cores for a lower or higher number of phases are possible.

Figs. 8a and 8b are schematic illustrations of single-phase transformer cores with winding arrangements according to embodiments. This is an alternative to the illustration of fig. 7 (therefore, not all details will be repeated, should, however, still be seen as disclosed with figs. 8a and 8b). It can also be used additionally, for example, in that the converter system has four phases. Three are handled by the transformer core shown in fig. 7 and the fourth phase is handled by the core of fig. 8a or 8b. Also, other compositions of different cores are possible (for 2, 3, 4, or more phases). As one example, three cores of fig. 8a or 8b can be used together to build a three-phase transformer system.

Fig. 8a shows a single-phase transformer core 20 with primary-side windings (111, 112, ..., 116) and secondary-side windings (211, 212, ..., 216) all wound around the same leg 28 of the core 20. The primary-side windings (111, 112, ..., 116) are all connected to the same phase output of the N-phase DC-to-AC converter 12.

Fig. 8b shows a single-phase transformer core 20 with primary-side windings (111, 112, 113, 114, 115, 116) and secondary-side windings (211, 212, 213, 214, 215, 216) all wound around the same core 20. Primary-side windings 111, 112, 113 and secondary-side windings 211, 212, 213 are wound around a first leg 28-1 of the core 20; and primary-side windings 114, 115, and 116 and secondary-side windings 214, 215, and 216 are wound around a second leg 28-2 of the core 20. The primary-side windings (111, 112, 113, 114, 115, 116) are all connected to the same phase output of the N-phase DC-to-AC converter 12. The primary-side windings 114, 115, and 116 and the secondary-side windings 214, 215, and 216 might have the opposite winding sense as the primary-side windings 111, 112, 113 and secondary-side windings 211, 212, 213 (for example, so that the windings around the first leg 28-1 are clockwise and the windings around the second leg 28-2 are counter-clockwise, or vice versa). Using both legs 28 of the core 20 for a single-phase transformer core may save space. The primary-side windings 114, 115, and 116 and the secondary-side windings 214, 215, and 216 may be arranged so that the magnetic field made in the core is in an opposite direction as a magnetic field made by the primary-side windings 111, 112, 113 and secondary-side windings 211, 212, 213 (so that the overall magnetic flux goes in a circular manner).

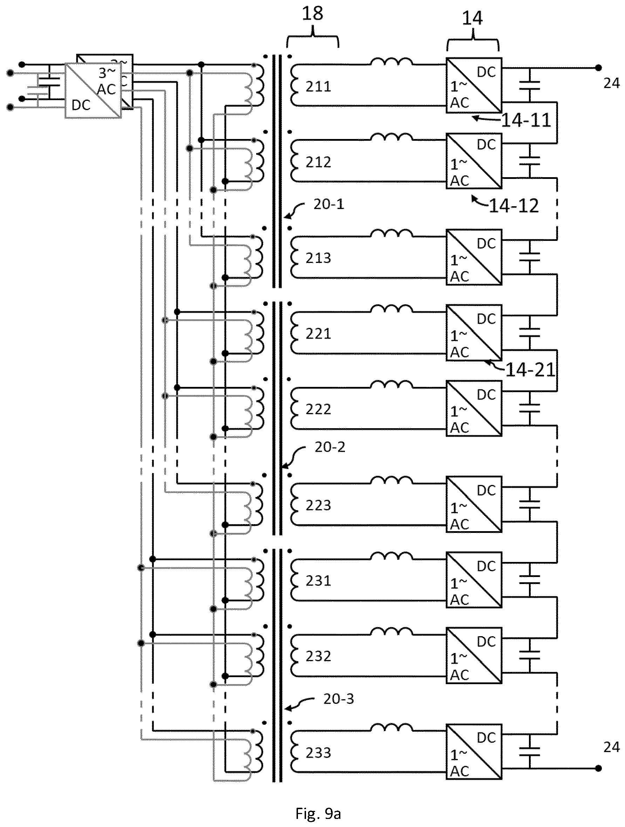

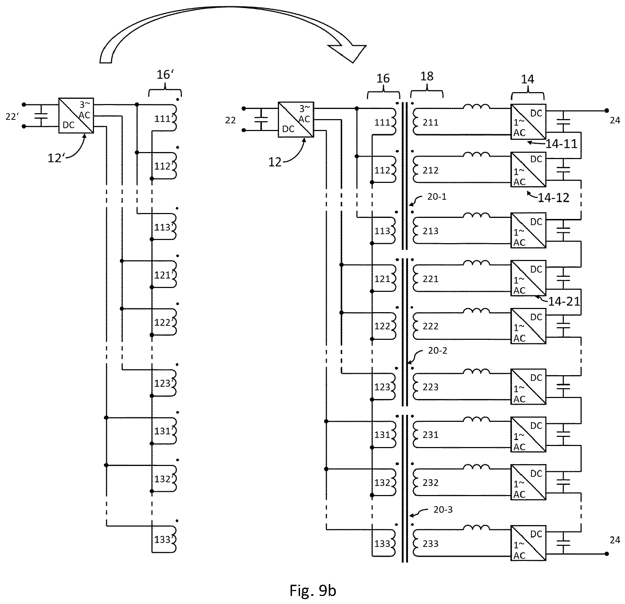

Figs. 9a and 9b show a schematic illustration according to another aspect of the converter system 10. The converter system 10 of Figs. 9a and 9b shows a converter system 10 with two primary side ports (comprising an N-phase DC-to-AC converter 12/12', the plurality of primary-side windings 16/16' and the wiring in between as described for previous figures). Also, three or more primary side ports are possible. Fig. 9a shows an overlay of the two primary side ports. For understanding purposes, Fig. 9b shows the two primary side ports separately, wherein the big arrow indicates that the windings of the second primary side port (with dashes') are also wound around the core-structure 20. The second primary side port may be identical to the first primary side port. It may have the same number of windings as the first primary side port.

Such a configuration with two, three, or more primary side ports may be used for electrical vehicle charging (or for other multiple electrical components). It allows multiple charging connections for multiple electrical vehicles. With a bidirectional converter system, it is possible to charge the vehicle(s) and/or use them as a storage for electrical energy from where energy might also be extracted for the power grid or other consumers.

In the converter system with two, three, or more primary side ports, the first and second winding pair may also be called first and second winding set or first and second winding group (and the following sets "third" and so on). Even though the term "pair" might not be perfectly fitting anymore (as three windings are comprised), the term is still maintained for consistency purposes.

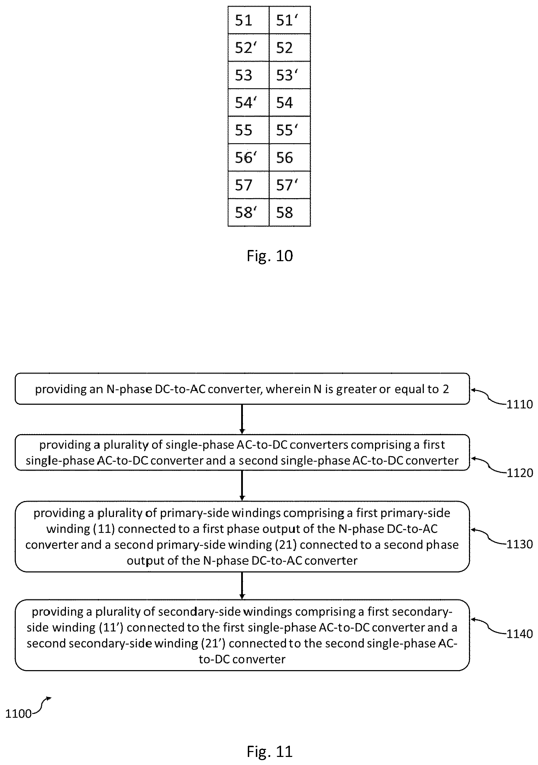

Fig. 10 is a schematic illustration according to an aspect of how the windings can be interleaved. It shows a cross section through two interleaved windings. The two windings may be a primary-side winding and the corresponding other primary-side winding (like the first primary-side winding 111 and the other (third) primary-side winding 111'; it could also be the second or n-th windings). Each box (surrounding a reference sign) represents a part of a conductor or one turn of a winding. The boxes with reference signs with a dash (51' to 58') represent a conductor of the other winding (like the other first primary-side winding 111'), while the boxes with reference signs without a dash (51 to 58) represent a conductor of the winding (like first primary-side winding 111).

An example in which both windings are wound in the same sense (clockwise or counter-clockwise) would mean that: the one winding (represented by reference signs without a dash) is first wound on the left side of the first row (reference sign 51), then to the right side of the second row (reference sign 52), then to the left side of the third row (reference signs 53), and so on until it is finally wound to the right side of the bottom row (reference sign 58). At the same time the other winding (represented by reference signs with a dash) is first wound on the right side of the first row (reference sign 51'), then to the left side of the second row (reference sign 52'), then to the right side of the third row (reference signs 53'), and so on until it is finally wound to the left side of the bottom row (reference sign 58').

In another example, the one winding may be wound in the following order (order represented by reference sings in order): 51 -> 53 -> 55 -> 57 -> 58 -> 56 -> 54 -> 52. At the same time the other winding is wound in the following order: 52' -> 54' -> 56' -> 58' -> 57' -> 55' -> 53' -> 51'. Also, other interleaving patterns are possible. In the examples explained with reference to Fig. 5, only eight rows were provided. It is possible that more or less rows are present (and with that more or less than eight turns). If there are more than two primary side ports, there are also turns from more than two conductors (/windings) interleaved. It is possible to have more than two columns.

This other example may be obtained by arranging the two conductors (with dash and without dash) next to each other in an axial direction, so they together have the same radial length. With this overall conductor, a helical winding is wound, layer by layer, with an arbitrary number of layers, starting with the innermost layer (two layers are shown in the other example).

Fig. 11 is a flow chart of a method 1100 according to an embodiment of the present disclosure. The method 1100 may produce any of the preceding converter system. In a first step 1110 an N-phase DC-to-AC converter is provided, wherein N is greater or equal to 2. In a second step 1120 a plurality of single-phase AC-to-DC converters is provided comprising a first single-phase AC-to-DC converter and a second single-phase AC-to-DC converter. In a third step 1130 a plurality of primary-side windings is provided comprising a first primary-side winding connected to a first phase output of the N-phase DC-to-AC converter and a second primary-side winding (21) connected to a second phase output of the N-phase DC-to-AC converter. In a fourth step 1140 a plurality of secondary-side windings is provided comprising a first secondary-side winding connected to the first single-phase AC-to-DC converter and a second secondary-side winding (21') connected to the second single-phase AC-to-DC converter. In the method 1100 the first primary-side winding is magnetically coupled to the first secondary-side winding and wherein the second primary-side winding is magnetically coupled to the second secondary-side winding.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits, and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein but is to be accorded the widest scope consistent with the novel features and principles disclosed herein, as recited in the claims below.

## Claims

1. Converter system comprising:
an N-phase DC-to-AC converter (12), wherein N is greater than or equal to 2;
a plurality of single-phase AC-to-DC converters (14) comprising a first single-phase AC-to-DC converter and a second single-phase AC-to-DC converter;
a plurality of primary-side windings (16, 111-116, 121-123, 131-133) comprising a first primary-side winding (111) connected to a first phase output of the N-phase DC-to-AC converter (12) and a second primary-side winding (121) connected to a second phase output of the N-phase DC-to-AC converter (12);
a plurality of secondary-side windings (18, 121, 122, 126, 211-216, 221, 222, 226, 231, 321, 322, 326) comprising a first secondary-side winding (211) connected to the first single-phase AC-to-DC converter and a second secondary-side winding (221) connected to the second single-phase AC-to-DC converter,
wherein the first primary-side winding (111) and the first secondary-side winding (211) are magnetically coupled to each other by being wound around a first core, and
wherein the second primary-side winding (121) and the second secondary-side winding (221) are magnetically coupled to each other by being wound around a second core.

2. Converter system according to claim 1, wherein the first core is a same core (20) as the second core, wherein the first primary-side winding (111) and the first secondary-side winding (211) are wound around a first leg of the first core, and wherein the second primary-side winding (121) and the second secondary-side winding (221) are wound around a second leg of the first core, wherein the second leg is different from the first leg.

3. Converter system according to claim 1, wherein the second core is different from the first core.

4. Converter system according to any one of claims 1 to 3, wherein the plurality of single-phase AC-to-DC converters (14) further comprises a third single-phase AC-to-DC converter and a fourth single-phase AC-to-DC converter,
wherein the converter system (10) further comprises:
a third primary-side winding (112) connected to the first phase output of the N-phase DC-to-AC converter (12) and a fourth primary-side winding (122) connected to the second phase output of the N-phase DC-to-AC converter (12), both comprised by the plurality of primary-side windings (16, 111-116, 121-123, 131-133); and
a third secondary-side winding (212) connected to the third single-phase AC-to-DC converter and a fourth secondary-side winding (222) connected to the fourth single-phase AC-to-DC converter, both comprised by the plurality of secondary-side windings (18, 121, 122, 126, 211-216, 221, 222, 226, 231, 321, 322, 326),
wherein the third primary-side winding (112) and the third secondary-side winding (212) are wound around a same core (20) as the first primary-side winding (111), and wherein the fourth primary-side winding (122) and the fourth secondary-side winding (222) are wound around a same core (20) as the second primary-side winding (121).

5. Converter system according to claim 4, wherein the third primary-side winding (112) and the third secondary-side winding (212) are wound around a same leg as the first primary-side winding (111), and wherein the fourth primary-side winding (122) and the fourth secondary-side winding (222) are wound around a same leg as the second primary-side winding (121).

6. Converter system according to claim 5, wherein the first primary-side winding (111) is positioned next to the third primary-side winding (112) in an axial direction (30), and wherein the axial direction (30) extends along a leg (28) the first and third primary-side windings (112) are wound around.

7. Converter system according to any one of claims 1 to 6, wherein the plurality of single-phase AC-to-DC converters (14) are connected in series on a DC side of each of the plurality of single-phase AC-to-DC converters (14).

8. Converter system according to any one of claims 1 to 6, further comprising:
a plurality of single-phase DC-to-AC converters (14), wherein each of the plurality of single-phase DC-to-AC converters (14) is connected to a DC side of a corresponding one of the plurality of single-phase AC-to-DC converters (14), and wherein the plurality of single-phase DC-to-AC converters (14) is connected in series on their AC side.

9. Converter system according to any one of claims 1 to 8, wherein N is equal to 3.

10. Converter system according to any one of claims 1 to 9, wherein each of the plurality of single-phase AC-to-DC converters (14) are full-bridge converters or half-bridge converters.

11. Converter system according to any one of claims 1 to 10, wherein the plurality of primary-side windings (16, 111-113, 121-123, 131-133) is connected in a star or delta transformer winding configuration.

12. Converter system according to any one of claims 1 to 11, wherein voltages in phase outputs of the N-phase DC-to-AC converter (12) have a phase shift of 360/N degrees relative to each other.

13. Converter system according to any one of claims 1 to 12, wherein the plurality of single-phase AC-to-DC converters (14) and the N-phase DC-to-AC converter (12) are of one of the following two- or multilevel converter topologies: neutral point piloted, flying capacitor, or neutral point clamped.

14. Converter system according to any one of claims 1 to 13, comprising one or more transformer(s) being medium frequency transformer(s), MFT; or
wherein a DC connection of the N-phase DC-to-AC converter (12) is in low voltage, LV, and a connection of the converter system (10) opposite to the DC connection of the N-phase DC-to-AC converter (12) is in medium voltage, MV, or high voltage, HV; or
wherein each of the plurality of primary-side windings (16, 111-113, 121-123, 131-133) substantially correspond to each other in winding sense, number of turns, and current running through it.

15. Method (1100) of producing a converter system (10) comprising:
providing (1110) an N-phase DC-to-AC converter (12), wherein N is greater or equal to 2;
providing (1120) a plurality of single-phase AC-to-DC converters (14) comprising a first single-phase AC-to-DC converter and a second single-phase AC-to-DC converter;
providing (1130) a plurality of primary-side windings (16, 111-116, 121-123, 131-133) comprising a first primary-side winding (111) connected to a first phase output of the N-phase DC-to-AC converter (12) and a second primary-side winding (121) connected to a second phase output of the N-phase DC-to-AC converter (12);
providing (1140) a plurality of secondary-side windings (18, 121, 122, 126, 211-216, 221, 222, 226, 231, 321, 322, 326) comprising a first secondary-side winding (211) connected to the first single-phase AC-to-DC converter and a second secondary-side winding (221) connected to the second single-phase AC-to-DC converter,
wherein the first primary-side winding (111) is magnetically coupled to the first secondary-side winding (211) and wherein the second primary-side winding (121) is magnetically coupled to the second secondary-side winding (221).
